# EUROPÄISCHE PATENTSCHRIFT

(11) **EP 2 910 773 B1**
(45) Veröffentlichungstag und Bekanntmachung des Hinweises auf die Patenterteilung: **28.02.2018**
(21) Anmeldenummer: 15156312.9
(22) Anmeldetag: 20.04.2007
(51) Int. Cl.: F03D 1/06

(54) **Rotorblattanschluss**
Rotor blade connection
Connexion pour pale de rotor

(30) Priorität: 11.05.2006 DE 102006022272
(43) Veröffentlichungstag der Anmeldung: 26.08.2015
(62) Teilanmeldung aus: 07724417.6
(73) Patentinhaber: Senvion GmbH, 22297 Hamburg (DE)
(72) Erfinder: Quell, Peter, 24783 Osterrönfeld (DE); Bendel, Urs, 24787 Fockbek (DE); Schubert, Matthias, 24768 Rendsburg (DE); Eusterbarkey, Carsten, 25813 Simonsberg (DE)
(74) Vertreter: Seemann & Partner Patentanwälte mbB

(56) Entgegenhaltungen:
- DE-A1- 3 103 710
- DE-A1- 3 109 566
- DE-A1- 19 826 086
- DE-U1- 9 201 280

## Beschreibung

Die Erfindung betrifft einen Rotorblattanschluss einer Windenergieanlage zur Verbindung eines Rotorblatts mit einer Anschlussvorrichtung umfassend einen Querstift und eine Verbindungsvorrichtung, die miteinander in Wirkverbindung bringbar sind, wobei die Verbindungsvorrichtung eine Längsachse definiert.

Die Erfindung betrifft ferner einen Rotorblattanschluss mit mehreren Querstiften, die jeweils mit einer Verbindungsvorrichtung in Wirkverbindung bringbar sind. Ferner betrifft die Erfindung einen Rotorblattanschluss, umfassend einen mit einer Verbindungsvorrichtung in Wirkverbindung stehenden Querstift, wobei wenigstens die Verbindungsvorrichtung vorgespannt ist.

Rotorblattanschlüsse zur Verbindung eines Rotorblatts mit einer Anschlussvorrichtung sind beispielsweise aus der WO 01/42647 A2 bekannt. Hierbei werden insbesondere durch Löcher in einer Rotornabe gehende Schrauben verwendet, die in Querbolzen eingeschraubt werden und die mittels einer Mutter vorgespannt werden. Ein derartiger Rotorblattanschluss ist einfach und zuverlässig zu realisieren. Derartige Rotorblattanschlüsse haben allerdings im Wesentlichen drei miteinander konkurrierende Randbedingungen, nämlich die Festigkeit des Querstiftes bzw. Querbolzens, die Lochlaibung, also insbesondere die Flächenpressung des Querbolzens im Rotorblatt, und die Festigkeit bzw. Restfestigkeit der Rotorblattschale, die aufgrund der durch das Vorsehen von Löchern zur Aufnahme der Querstifte erzeugten Perforation im Vergleich zur nicht gelöcherten Blattschale verringert wird. Aufgrund dieser Randbedingungen können die Querstifte bei dieser Art des Rotorblattanschlusses nur sehr bedingt dicht gepackt werden, so dass im Vergleich zu anderen Blattanschlüssen, beispielsweise eingeklebten Flanschen oder eingeklebten Inserts, wie diese in EP 1 486 415 A1 und der DE 296 18 525 U1 offenbart sind, ein größerer Gesamtdurchmesser des Rotorblattanschlusses erforderlich ist, um eine vorgegebene Anzahl von Blattbolzen unterzubringen bzw. eine deutlich dickere Wandstärke benötigt wird. DE 31 03 710 offenbart ein Rotorblatt einer Windenergieanlage mit einem Rotorblattanschluss, das vorgespannte Verbindungsvorrichtungen und Querstifte aufweist.

DE 92 01 280 U1 bezieht sich auf den Aufbau eines Windrades, das in jedem Rotorblatt ein Biegeelement mit einer Konstruktion aus Metall/ Kunststoffschichtverbund aufweist.

DE 31 09 566 A1 zeigt ein Rotorblatt für Windenergiemaschinen und eine Spannvorrichtung zur Montage des Rotorblattes.

DE 198 26 086 A1 offenbart ein Verfahren zum Herstellen eines Rotorblatts für Windkraftanlagen und ein entsprechendes Rotorblatt, wobei ein Befestigungselement zur Befestigung des Rotorblatts an einer Rotornabe vorgesehen ist, wobei ein Kunststoffeinlegekörper an seinem nabenseitigen Ende in eine Aufnahmeeinrichtung am Befestigungselement eingesetzt wird.

Es ist Aufgabe der vorliegenden Erfindung, alternative Rotorblattanschlüsse anzugeben, die einen sicheren Rotorblattanschluss zur Verbindung eines Rotorblatts mit einer Anschlussvorrichtung ermöglichen, wobei bei möglichst wenig Materialverbrauch bzw. einer möglichst geringen Dicke der Blattschale eine ausreichend feste Verbindung auch bei großen Rotorblättern ermöglicht wird.

Die Aufgabe wird durch ein Rotorblatt mit einem Rotorblattanschluss für eine Windenergieanlage zur Verbindung des Rotorblatts mit einer Anschlussvorrichtung, umfassend eine Verbindungsvorrichtung und einen mit der Verbindungsvorrichtung in Wirkverbindung stehenden Querstift gelöst, wobei wenigstens die Verbindungsvorrichtung vorgespannt ist, wobei das Material des Rotorblatts wenigstens im Bereich des Querstifts eine Struktur aus faserverstärkten Kunststofflagen und Lagen aus einem Metall umfassenden Verstärkungsmaterial umfasst.

Durch die Verwendung eines Metall umfassenden Verstärkungsmaterials, das insbesondere ausschließlich aus Metall sein kann, wird die Druckfestigkeit der gesamten Struktur bei vergleichbarer Dicke im Vergleich zu ausschließlich faserverstärkten Kunststofflagen erhöht. Diese Erhöhung beträgt vorzugsweise wenigstens 30 %. Insbesondere ist auch die Lochleibungsfestigkeit dieser verwendeten Struktur aus faserverstärkten Kunststofflagen und Lagen aus einem Metall umfassenden Verstärkungsmaterial deutlich gegenüber der Lochleibungsfestigkeit einer Struktur ausschließlich aus faserverstärkten Kunststofflagen erhöht, wodurch insbesondere der Durchmesser der Querstifte zur Verbindung oder auch die Wandstärke des gesamten Blattanschlusses verringert werden kann, wodurch wieder eine erhöhte Dichte von Querstiften bzw. Verbindungsvorrichtungen beim Rotorblattanschluss ermöglicht ist.

Vorzugsweise erstreckt sich der Bereich, in dem das Material des Rotorblatts eine Struktur aus faserverstärkten Kunststofflagen und Lagen aus einem Metall umfassenden Verstärkungsmaterial umfasst auf den Bereich, in der eine Kraft aufgrund der Vorspannung auf das Material des Rotorblatts wirkt. Vorzugsweise erstreckt sich dieser Bereich auf den Bereich der Rotorblattwurzel.

In einer besonders bevorzugten Ausgestaltung des erfindungsgemäßen Rotorblatts ist in einem Übergangsbereich zur Anpassung der Struktur der Rotorblattwurzel an die Struktur des Rotorblatts eine wenigstens teilweise von Lage zu Lage, insbesondere stetige, Verlängerung der Lagen aus dem Verstärkungsmaterial zu der Rotorblattspitze vorgesehen. Es kann auch teilweise eine von Lage zu Lage Verlängerung der Lagen beinhalten, dass zwei aufeinander folgende Lagen auch gleich lang sein können oder auch mehrere aufeinander folgende Lagen gleich lang sein können. Es sollte allerdings weitgehend gewährleistet sein, dass von Lage zu Lage nicht eine Verringerung der Länge teilweise stattfindet, und dann wieder eine Verlängerung der Lagen.

Vorzugsweise ist das Verstärkungsmaterial Metall bzw. besteht ausschließlich aus Metall. Vorzugsweise liegt das Metall als Folie oder Gitter vor, wobei unter Folie insbesondere ein flächiges Material verstanden wird und unter Gitter verbundene Stäbe bzw. verbundene Fasern aus Metall oder ein Blech, das Löcher aufweist.

Vorzugsweise liegt die Dicke der Folie zwischen 0,1 mm bis 0,8 mm, insbesondere zwischen 0,15 mm bis 0,5 mm, insbesondere zwischen 0,2 mm und 0,3 mm.

Vorzugsweise liegt die Dicke der faserverstärkten Kunststofflagen zwischen 0,2 mm und 1 mm, insbesondere zwischen 0,4 mm und 0,9 mm, insbesondere zwischen 0,6 mm und 0,7 mm.

Um eine belastungsgerechte Verteilung der Fasern in den faserverstärkten Kunststofflagen zu ermöglichen, ist vorzugsweise vorgesehen, dass wenigstens ein Teil der faserverstärkten Kunststofflagen unidirektional ausgerichtete Fasern aufweist, die in längsaxialer Richtung des Rotorblatts ausgerichtet sind.

Wenn die Längsachse der Verbindungsvorrichtung im Wesentlichen mit der Mittelachse der Rotorblattwandung fluchtet, insbesondere in einer Ebene mit dieser liegt, ist ein sehr stabiler Rotorblattanschluss möglich.

Es ist ein Rotorblatt mit einem Rotorblattanschluss einer Windenergieanlage zur Verbindung des Rotorblatts mit einer Anschlussvorrichtung umfassend einen Querstift und eine Verbindungsvorrichtung, die miteinander in Wirkverbindung bringbar sind, angegeben, wobei die Verbindungsvorrichtung eine Längsachse definiert, der dadurch weitergebildet ist, dass der Querstift in Richtung der Längsachse der Verbindungsvorrichtung eine höhere Biegesteifigkeit aufweist als quer zur Längsachse.

Durch diese Maßnahme ist es möglich, die Breite des Querstiftes im Vergleich zu einem runden Querstift zu verringern, so dass die in die Blattschale des Rotorblatts zur Aufnahme des Querstiftes vorgesehenen Löcher kleiner realisiert werden können, wodurch das Problem der Perforation bzw. der zu starken Perforation verringert wird und wodurch eine größere Dichte an Querstiften vorgesehen werden kann.

Im Rahmen der Erfindung umfasst der Begriff Anschlussvorrichtung insbesondere Pitchlager, Rotornabe oder allgemein Anschlussbauteil. Vorzugsweise hat der Querstift in Richtung der Längsachse der Verbindungsvorrichtung eine größere Ausdehnung als quer zur Richtung der Längsachse der Verbindungsvorrichtung. Durch diese vorzugsweise Ausgestaltung des Rotorblattanschlusses ist eine besonders einfache Realisierung möglich. Im Rahmen der Erfindung wird die Ausdehnung in Richtung der Längsachse der Verbindungsvorrichtung auch als Höhe bezeichnet.

Vorzugsweise ist der Querstift im Querschnitt rechteckförmig mit abgerundeten Kanten ausgebildet. Durch diese Maßnahme ist ein besonders stabiler Querstift realisierbar. Wenn der Querstift im Querschnitt elliptisch, oval, teilweise elliptisch oder teilweise oval ausgebildet ist, wird dem Problem Rechnung getragen, dass das den Querstift umgebende Material, insbesondere glasfaserverstärkter Kunststoff im Vergleich zu einem Material, aus dem die Querstifte gefertigt sind, wie beispielsweise Metall, deutlich weicher ist. Bei einer, insbesondere teilweise, ovalen bzw. vorzugsweise elliptischen Form des Querstiftes im Querschnitt wird die auf das umgebende Material drückende Kraft bei einem im Betrieb befindlichen Rotorblattanschluss bzw. bei vorgespannter Verbindung sehr gleichmäßig in dem den Querstift umgebenden Material verteilt.

Vorzugsweise ist der Querstift im Querschnitt doppel-T-förmig mit abgerundeten Kanten oder knochenförmig ausgebildet. Hierdurch ergibt sich eine Material sparende Ausgestaltung des Querstiftes, der trotzdem noch ausreichend stabil gefertigt ist.

Es ist ein Rotorblatt mit einem Rotorblattanschluss einer Windenergieanlage, der insbesondere Merkmale des vorstehenden Rotorblattanschlusses realisiert, zur Verbindung des Rotorblatts mit einer Anschlussvorrichtung, umfassend mehrere Querstifte, die jeweils mit einer Verbindungsvorrichtung in Wirkverbindung bringbar sind, angegeben, wobei die Querstifte in wenigstens zwei Reihen angeordnet sind, wobei wenigstens eine erste Reihe näher an dem blattwurzelseitigen Ende des Rotorblatts angeordnet ist als wenigstens eine zweite Reihe. Auch durch diese Maßnahme ist es möglich, die Dichte der zum Rotorblattanschluss zu verwendenden Querstifte und Verbindungsvorrichtungen zu erhöhen, so dass ein sicherer Rotorblattanschluss gewährleistet ist.

Wenn vorzugsweise die Reihen um den Umfang der Blattwurzel des Rotorblatts angeordnet sind, ist ein besonders verlässlicher Rotorblattanschluss gegeben.

Wenn die Wirkverbindung der Verbindungsvorrichtungen mit den Querstiften, die in der zweiten Reihe angeordnet sind, weicher ausgestaltet ist im Vergleich zur Wirkverbindung der Verbindungsvorrichtungen mit den Querstiften, die in der ersten Reihe angeordnet sind, ist eine gleichmäßigere Kraftaufteilung beim Rotorblattanschluss auf das die Querstifte umgebende Material und die Querstifte möglich.

Dieses kann insbesondere dadurch realisiert werden, dass die Verbindungsvorrichtungen wenigstens teilweise unterschiedlich lang sind. Vorzugsweise sind die Verbindungsvorrichtungen, die der ersten Reihe zugeordnet sind, kürzer als die Verbindungsvorrichtungen, die der zweiten Reihe zugeordnet sind. In einem besonders bevorzugten Ausführungsbeispiel sind die Verbindungsvorrichtungen wenigstens teilweise unterschiedlich dick. Dieses kann dadurch geschehen, dass die Verbindungsvorrichtungen teilweise in sich bereichsweise über die Länge verteilt unterschiedlich dick sind oder aber dass die Verbindungsvorrichtungen zueinander unterschiedlich dick sind bzw. eine Kombination der beiden vorgenannten Varianten. Vorzugsweise sind die Verbindungsvorrichtungen, die der ersten Reihe von Querstiften zugeordnet sind, dicker als die Verbindungsvorrichtungen, die der zweiten Reihe von Querstiften zugeordnet sind. Hierdurch wird eine weichere Verbindung der Verbindungsvorrichtung mit den Querstiften, die in der zweiten Reihe angeordnet sind, realisiert im Vergleich zur Wirkverbindung der Verbindungsvorrichtungen mit den Querstiften, die in der ersten Reihe angeordnet sind.

Es ist ein Rotorblatt mit einem Rotorblattanschluss für eine Windenergieanlage, insbesondere mit einer wenigstens teilweise Realisation der oben genannten Merkmale eines erfindungsgemäßen Rotorblattanschlusses, zur Verbindung des Rotorblatts mit einer Anschlussvorrichtung umfassend einen Querstift und eine Verbindungsvorrichtung, die miteinander in Wirkverbindung bringbar sind, angegeben, wobei der Rotorblattanschluss dadurch weitergebildet ist, dass der Querstift von dem Rotorblatt vollständig eingekapselt ist. Bei dieser Maßnahme dient das Material, das den Querstift vollständig einkapselt bzw. ummantelt, auch zur Stabilitätserhöhung des Rotorblatts im Bereich der Querstifte, wodurch eine erhöhte Dichte von Querstiften im Bereich der Anordnung von Querstiften möglich ist. Wenn das Einkapseln der Außenfläche und der der Innenfläche des Rotorblatts zugewandten Seiten des Querstifts durch ein im Rotorblatt verwendetes Material, insbesondere durch wenigstens eine Laminatlage, geschieht, ist eine besonders einfache und effiziente Einkapselung des Querstifts möglich. Die Laminatlage besteht bzw. umfasst vorzugsweise faserverstärkten Kunststoff. Es können auch mehrere Laminatlagen vorgesehen sein. Vorzugsweise wird die wenigstens eine Laminatlage durch eine oder mehrere Verstärkungsmateriallagen, insbesondere Metalllagen, verstärkt.

Vorzugsweise sind die der Außenfläche und die der Innenfläche des Rotorblatts zugewandten Seiten des Querstifts mit einer Materialdicke von 5 mm bis 20 mm, insbesondere 10 mm bis 15 mm, bei einem 35 m bis 55 m langen Rotorblatt eingekapselt.

Vorzugsweise reicht das zum Einkapseln dienende Material weit über den Bereich des in dem Rotorblatt eingebrachten Querstifts. Das zum Einkapseln dienende Material ist hierbei möglichst zusammenhängend beispielsweise durch eine oder mehrere durchgehende Lagen aus faserverstärktem Kunststoff und/oder eine oder mehrere durchgehende Lagen Verstärkungsmaterial ausgestaltet.

Wenn der Querstift an wenigstens einer Seite, die der Innenfläche und/oder der Außenfläche des Rotorblatts zugewandt ist, eine Öffnung aufweist, in der ein Werkzeug form- und/oder reibschlüssig wenigstens mittelbar einbringbar ist, kann bei Beschädigung des Querstifts dieser relativ unproblematisch ausgetauscht werden. Vorzugsweise ist hierzu die Öffnung ein Sackloch, in dem ein Gewinde vorgesehen ist.

Vorzugsweise umfasst die Verbindungsvorrichtung eine Schraube, insbesondere Dehnschaftschraube. Unter Schraube wird im Rahmen der Erfindung auch ein Bolzen kombiniert mit einer Mutter verstanden, wobei der Bolzen wenigstens teilweise mit einem Gewinde oder mehreren Gewinden versehen ist. Die Verbindungsvorrichtung kann auch eine Nietverbindung umfassen oder eine andere Art von Verbindung, beispielsweise eine formschlüssige und/oder reibschlüssige Verbindung. Vorzugsweise sind mehrere Verbindungsvorrichtungen vorgesehen, die in Wirkverbindung mit jeweils wenigstens einem Querstift stehen. Vorzugsweise erzeugt die Wirkverbindung eine Vorspannung.

Durch das erfindungsgemäße Rotorblatt ist es insbesondere möglich, einen sicheren Rotorblattanschluss mit Querstiften zu gewährleisten, der einen vergleichbaren oder kleineren Durchmesser wie bekannte Rotorblattanschlüsse aufweist.

Vorzugsweise umfasst ein Rotor einer Windenergieanlage wenigstens eine Rotornabe und ein erfindungsgemäßes Rotorblatt, das vorstehend beschrieben ist.

Vorzugsweise wird eine Windenergieanlage mit einem Rotorblatt, das vorstehend beschrieben wurde, verwendet.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine Windenergieanlage in schematischer dreidimensionaler Darstellung gemäß dem Stand der Technik,
- Fig. 2: einen Ausschnitt aus der Windenergieanlage aus Fig. 1 in schematischer dreidimensionaler Darstellung,
- Fig. 3: einen Ausschnitt aus Fig. 2 in schematischer Darstellung gemäß dem Stand der Technik,
- Fig. 4: eine schematische teilweise Schnittdarstellung eines Rotorblattanschlusses,
- Fig. 5: eine schematische Schnittdarstellung eines Querstiftes,
- Fig. 6: eine schematische Schnittdarstellung eines weiteren Querstiftes,
- Fig. 7: eine schematische Schnittdarstellung noch eines weiteren Querstiftes,
- Fig. 8: eine schematische Draufsicht eines Teils einer Blattwurzel,
- Fig. 9: eine schematische Schnittdarstellung eines Rotorblattanschlusses,
- Fig. 10: eine schematische Schnittdarstellung eines erfindungsgemäßen Rotorblattanschlusses und
- Fig. 11: eine weitere schematische Schnittdarstellung eines erfindungsgemäßen Rotorblattanschlusses.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

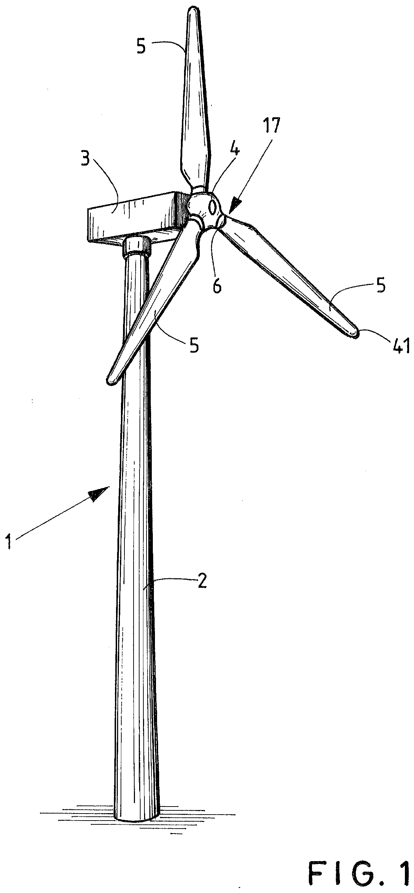

Fig. 1 zeigt eine schematische dreidimensionale Darstellung einer Windenergieanlage 1 gemäß dem Stand der Technik. Die Windenergieanlage 1 umfasst einen Turm 2, auf dem ein Turmkopf 3 aufgebracht ist, der üblicherweise einen nicht dargestellten Generator aufweist. Es ist ferner eine Rotornabe 4 dargestellt, an der Rotorblätter 5 an der Blattwurzel 6 mit der Rotornabe 4 verbunden sind. Es ist ferner schematisch ein Rotorblattanschluss 17 angedeutet und eine Rotorblattspitze 41, die zur Erläuterung der nachstehenden Zeichnungen Verwendung finden sollen.

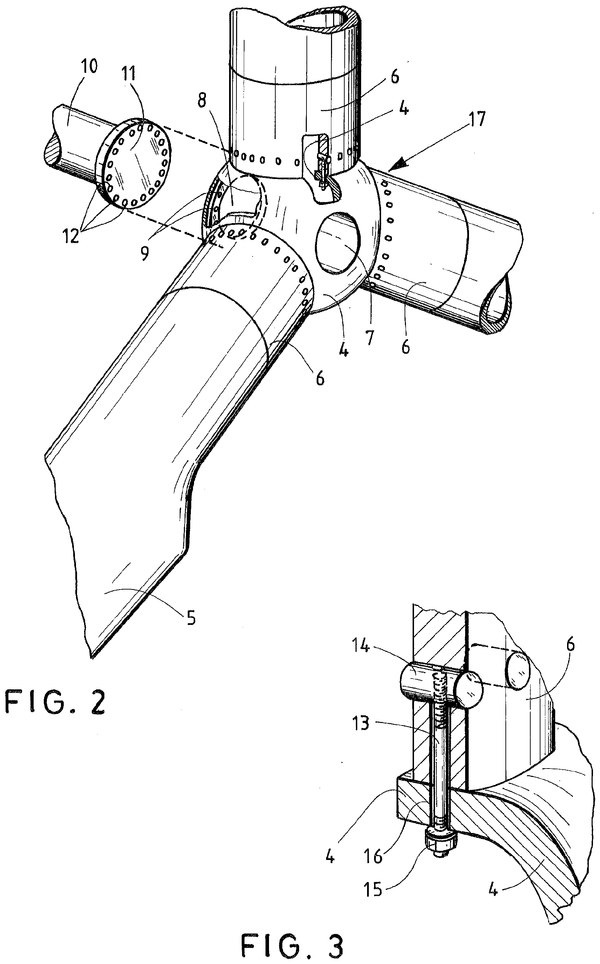

Fig. 2 zeigt eine schematische dreidimensionale Darstellung eines Teils der Windenergieanlage 1 aus Fig. 1 des Standes der Technik. Die Rotornabe 4 ist über nicht dargestellte Schraubverbindungen, die durch Flanschlöcher 9 und Löcher 12 vorgesehen sein können, über einen Flansch 11 und einen Generatorschaft 10 mit einem Generator verbindbar. Um die entsprechenden Verbindungen vornehmen zu können, sind Öffnungen 7 und 8 in der Rotornabe 4 vorgesehen. Die Rotorblätter 5 sind an den Blattwurzeln 6 mit der Rotornabe 4 verbunden. Zur Verbindung sind Schrauben 13 gemäß Fig. 3, Querstifte 14 und Muttern 15 vorgesehen, wobei entsprechende Löcher 16 bzw. Bohrungen in dem jeweiligen Material vorgesehen sind, um eine Verbindung zu ermöglichen. Zum Festziehen der Muttern 15 sind entsprechende Öffnungen 7 und 8 in der Rotornabe 4 vorgesehen. Durch das Festziehen der Muttern 15 wird eine Vorspannung erzeugt.

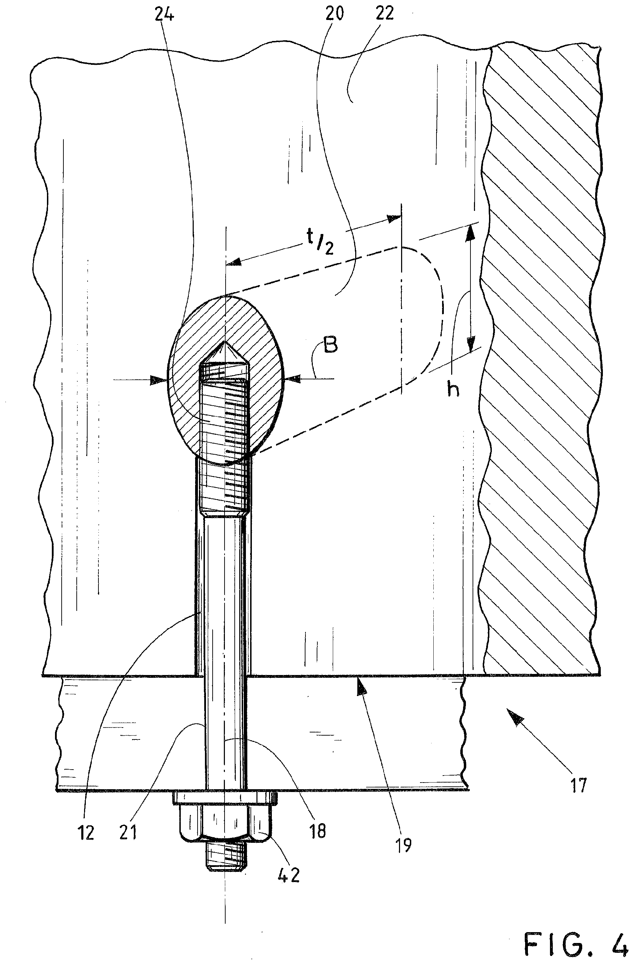

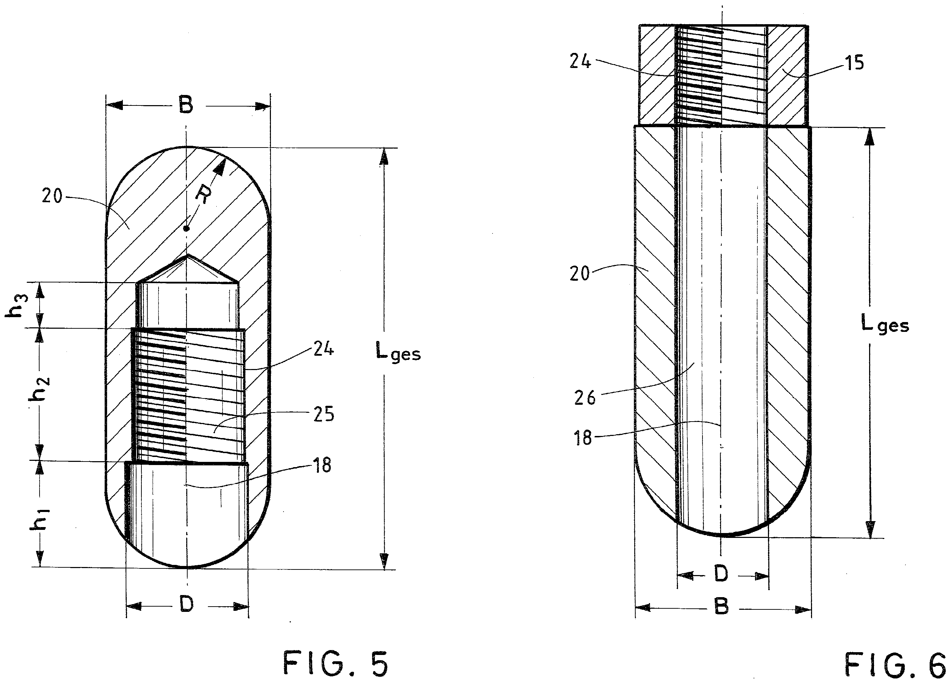

Fig. 4 zeigt eine schematische Schnittdarstellung eines bevorzugten Rotorblattanschlusses 17. In einer Wandung 22 der Blattwurzel ist ein Querstift 20 eingebracht, der eine größere Höhe h als Breite B hat. Die dargestellte Tiefe t/₂ entspricht der Hälfte der tatsächlichen Tiefe t des Querstiftes 20, da es sich in Fig. 4 um eine Schnittdarstellung entlang ungefähr der Hälfte durch das Material der Wandung 22 handelt. Der Querbolzen 20 hat einen Querschnitt, der in diesem Ausführungsbeispiel elliptisch ist. Für das Laminat, das in dem Material der Wandung 22 enthalten ist, ist eine Ellipse für die Aufnahme der entsprechenden Kräfte bei der Vorspannung, die aufgrund des Einschraubens der Schraube 21 bzw. des Blattbolzens 21 in das Gewinde 24, das im Querstift 20 vorgesehen ist, die optimale Form. Es kann sowohl eine Variante mit einem mit Gewinden an zwei Enden versehener Stift bzw. Bolzen vorgesehen sein als auch eine Variante mit einer Schraube 21. In Fig. 4 ist allerdings die Bolzenvariante vorgesehen. Für die Stabilität des Querstiftes 20 bzw. Querbolzens ist ein Rechteck, vorzugsweise mit abgerundeten Kanten im Querschnitt oder eine Acht bzw. ein weiches Doppel-T eine bevorzugte Form. Für die Fertigung ist es einfacher bzw. bevorzugt, eine Art Langloch in der Wandung 22 vorzusehen, um einen Querstift 20, der im Querschnitt schematisch in Fig. 5 dargestellt ist, einzuführen. Die Querstifte 20 der Figuren 4 und 5 weisen ein Sackloch 25 mit Gewinde auf.

Bei einem 45 m langen Rotorblatt ist die gesamte Länge L_{ges} bzw. Höhe h des Querstifts 20 vorzugsweise bei ca. 2,5 x der Breite B. Die Breite B ist vorzugsweise im Bereich von 1,5 bis 1,7 x der Größe des Schraubengewindes, also bei einer M30 Schrauben 45 mm bis 50 mm. Die Position des Gewindes ist etwa mittig im Querstift 20 bzw. Bolzen. Es ist eine relativ große Freibohrung trotz eines entsprechenden Querschnittsverlustes von Vorteil, da die örtlichen Beanspruchungen am zugbelasteten Bohrungsrand hierdurch sinken, was sich positiv auf die Lebensdauer auswirkt. Es sollte eine hohe Materialgüte gewählt werden, um mit einer geringen Einschraubtiefe auszukommen. Es kann auch von Vorteil sein, den zugbeanspruchten Bohrungsrand mit bleibenden Druckeigenspannungen zu versehen. Dieses kann beispielsweise durch Kugelstrahlen oder Vorrecken oder Ähnliches geschehen. Hierdurch wird auch die Lebensdauer des Querstiftes 20 erhöht. Es kann ferner vorgesehen sein, durch besondere Gewindeformen, wie beispielsweise ein Sägezahngewinde die radialen Kräfte, die das Gewinde aufweiten wollen, zu reduzieren. Es kann außerdem vorgesehen sein, die Schrauben oder Bolzen oder Gewindestifte mit einem Dehnschaft zu versehen und/oder ggf. mit einem Feingewinde im Querbolzen bzw. Querstiftbereich.

Vorzugsweise sind Regelgewinde im Bereich der Montageverschraubung zur Mutter 42, also bei einer Verschraubung auf dem Feld unter erschwerten Bedingungen vorgesehen. Der Querschnitt kann wie in Fig. 4 in einer Ellipsenform ausgeführt werden, was zu einer optimalen Beanspruchung im Laminatquerschnitt beitragen kann. Die Position des Querstiftes 20 soll so dicht wie möglich an der Blattwurzel vorzugsweise vorgesehen sein. Die Laminatwandstärke in der Wandung 22 sollte im Bereich von 2 x der Breite B bis 3 x der Breite B liegen. x ist der Operator der Multiplikation. Zur besseren Veranschaulichung ist noch das blattwurzelseitige Ende 19 der Blattwurzel dargestellt und die Längsachse 18 der Dehnschaftsbolzen 21.

Die bevorzugte Ausführungsform des Querstiftes 20 der Fig. 5 ist dergestalt, dass B im Bereich von 45 mm liegt, die Gesamthöhe L_{ges} im Bereich von ca. 110 mm, wobei ein Gewinde M27 Verwendung findet und der Durchmesser D des Sackloches im unteren Bereich bei ca. 32 mm liegt, h₁ liegt bei ca. 30 mm und h₂ bei ca. 30 mm. In dem Bereich von h₂ ist auch das Gewinde 24 vorgesehen und h₃ liegt bei ungefähr 15 mm. Es ergibt sich dann eine Laminatdicke von vorzugsweise 100 mm. Die Gesamttiefe t ist also ca. 100 mm.

Ein alternativer Querstift 20 ist in Fig. 6 dargestellt. Es handelt sich um einen teilweise ovalen Querstift, der eine Durchgangsbohrung 26 bzw. ein Durchgangsloch 26 aufweist. Hierbei ist vorgesehen, den Durchmesser D der Bohrung möglichst gering vorzusehen, um eine maximale Querschnittsfläche von B x t - π/4 x D² zu erreichen. Die Breite B kann im Bereich des Ausführungsbeispiels gemäß Fig. 5 sein. Die Gesamthöhe L_{ges} ist vorzugsweise größer als 2,5 x der Breite B. Es ist dann ferner eine Mutter 15 mit einem Gewinde 24 oberhalb des Durchgangsloches 26 vorgesehen. Die Mutter 24 kann mit dem Querstift 20 verbunden sein. Es können ferner formschlüssige Elemente vorgesehen sein, um das Einschrauben einer Schraube in das Gewinde 24 der Mutter 15 bei der Montage zu vereinfachen.

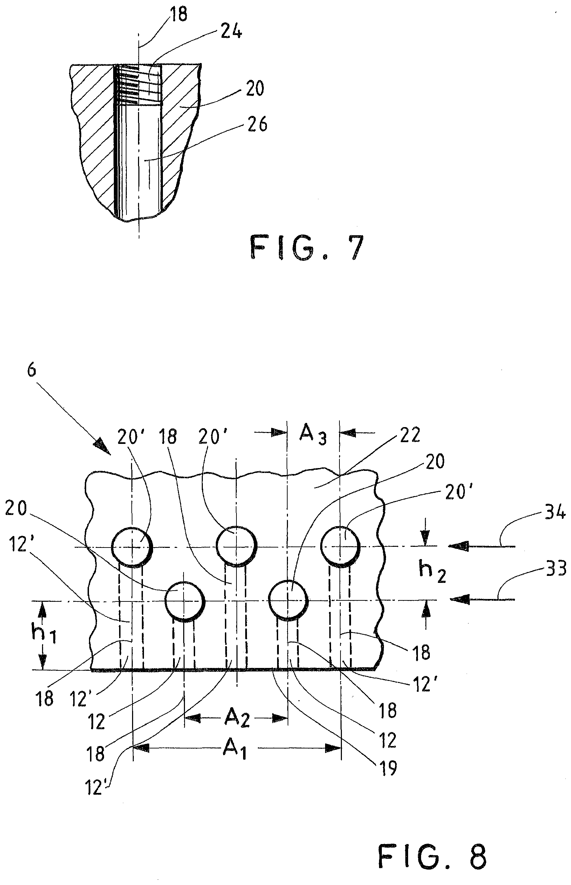

Es ist ferner eine weitere Ausführungsform eines Querstiftes 20 in schematischer Schnittdarstellung in Fig. 7 dargestellt. In diesem Ausführungsbeispiel ist das Durchgangsloch 26 im oberen Bereich mit einem Gewinde 24 versehen. Durch die längliche Form des Querstiftes 20 ist ein höherer Widerstandsmoment im Rotorblattanschluss gegeben, wodurch der Querstift schmaler als im Stand der Technik ausgeführt werden kann.

In Fig. 8 ist eine schematische Draufsicht auf einen Teil einer bevorzugten Blattwurzel 6 dargestellt. Die in der Blattwurzel vorgesehene Biegung bzw. Rundung ist hier in der Darstellung vernachlässigt. Es sind zwei Reihen 33 und 34 von Querstiften 20, 20' vorgesehen, die durch entsprechende Löcher 12, 12' mit Verbindungsschrauben verbunden werden können, so dass eine entsprechende Vorspannung der Blattwurzel 6 mit beispielsweise einer Rotornabe oder einem Anschlussflansch ermöglicht ist. Die Rotornabe bzw. der Anschlussflansch ist in der Fig. 8 nicht dargestellt. Im Stand der Technik ist es so, dass die Anzahl der Verbindungspaare von Querstift und Schrauben, die alle in einer einzigen Reihe vorgesehen sind, im gleichen Abstand zum Blattflansch bzw. zum blattwurzelseitigen Ende 10 liegen. Die Anzahl dieser Verbindungspaare ist durch den Gewindedurchmesser des Axialbolzens bzw. Querstifts 20, 20' und die angreifende Last bestimmt. Bei zunehmender Blattlänge steigen die Lasten an, wodurch das Biegemoment im Querbolzen ansteigt, weswegen der Querbolzen dicker werden muss. Aus diesem Grund können nur wenige Querbolzen auf dem Umfang der Blattwurzel 6 angeordnet werden, wodurch die Last, die auf die einzelnen Querbolzen wirkt, steigt. Die Erfindung sieht nun vor, wenigstens zwei Ebenen von Querbolzen bzw. wenigstens zwei Reihen 33, 34 von Querbolzen mit unterschiedlichen Abständen zur Blattwurzel am blattwurzelseitigen Ende 19 vorzusehen. Hierdurch können die Kräfte entsprechend aufgeteilt werden und die Abstände der jeweiligen Querstifte 20 bzw. 20' verringert werden, wodurch eine erhöhte Anzahl von Querstiften 20, 20' Verwendung finden kann. Hierdurch können mehr Bolzenpaare bei gleichem Umfang der Blattwurzel angeordnet werden. Außerdem kann der Durchmesser der Blattwurzel im Verhältnis zur Blattlänge kleiner gestaltet werden. Außerdem kann in einem größeren Bereich des Rotordurchmessers eine Plattformstrategie durchgesetzt werden.

Bei einem 45 m langen Rotorblatt hat der Querstift 20 vorzugsweise einen Durchmesser von 60 mm. Als Axialbolzen bzw. Schraubverbindung ist eine M30 Schraube oder ein M30 Bolzen mit 24 mm Schaft für die erste Reihe 33 der Querstifte 20 vorgesehen, die durch das Loch 12 geführt werden, und längere Bolzen bzw. Schraubverbindungen mit einem 20 mm Schaft für die zweite Reihe 34 von Querstiften 20', die durch die längeren Löcher 12' geführt werden. Der Durchmesser der Blattwurzel bzw. des Kreises, der durch die Querstifte definiert ist, beträgt ca. 2,11 m. Der bevorzugte Abstand der ersten Stiftreihe vom blattwurzelseitigen Ende 19 beträgt vorzugsweise ca. 150 mm und der Abstand der zweiten Stiftreihe 34 vom blattwurzelseitigen Ende 19 beträgt vorzugsweise ca. 215 mm. Die Laminatdicke beträgt vorzugsweise ca. 100 mm. Für das Gesamtlaminat sind Materialwerte vorgesehen, die eine Laminatsteifigkeit in Blattlängsrichtung von ca. 30.000 N/mm² und eine Schubsteifigkeit des Laminats von ca. 5.000 N/mm² ermöglichen. h1 ist wie eben angedeutet ca. 150 mm und h2 65 mm. A1 beträgt ca. 332 mm und A2 166 mm. A3 beträgt ca. 83 mm. Für die Stabilität der Querstifte ist es sinnvoll, wenn die Laminatsteifigkeit in Blattlängsachse möglichst hoch ist, also möglichst viele unidirektionale Lagen in Blattlängsrichtung, d.h. mit 0° zur Blattlängsrichtung vorgesehen sind. Die Last verteilt sich allerdings am besten zwischen den beiden Reihen 33 und 34, wenn der Schubmodul des Laminats möglichst hoch ist, also möglichst viele +/- 45°-Lagen des Laminats vorgesehen sind. Ein bevorzugtes Verhältnis der Phasenorientierungen in der Blattwurzel 6 liegt bei ca. 55% 0° unidirektionale Lagen 14% 90° unidirektionale Lagen und 31% +/- 45° Lagen.

Die zweite Reihe der Querbolzen 34 bekommt, da sie aus Sicht der Blattbelastung vorne liegt, eine erhöhte Belastung im Vergleich zur ersten Reihe 33. Um eine Vergleichsmäßigung der Kraftverteilung zwischen den beiden Reihen zu ermöglichen, werden die Schraubbolzen der zweiten Reihe gezielt weicher ausgestaltet als die der ersten Reihe. Dieses geschieht beispielsweise durch Vorsehen von unterschiedlich dünnen Schäften der Bolzen bzw. Schrauben, die mit den Querstiften 20' in Wirkverbindung gebracht werden. Anstelle der im Querschnitt kreisförmigen Querstifte können auch wie vorstehend schon angegeben, andersförmige Querstifte vorgesehen sein, die insbesondere eine größere Höhe als Breite aufweisen.

Auch hierdurch kann insbesondere die zweite Reihe 34 weicher gestaltet werden, als die erste Reihe 33 der Querstifte 20,20'. Eine Spannungsüberhöhung tritt im Wesentlichen am Lochrand der Querstifte 20, 20' auf. Deshalb können die Lochreihen auch näher zusammenrücken als aktuell in diesem Beispiel dargestellt. Es ist beispielsweise eine Teilung von 166 mm und ein Abstand der Lochreichen von 65 mm vorgesehen. Der Abstand der Lochreihen zu dem wurzelseitigen Ende 19 kann noch ein wenig kleiner sein als dargestellt, so dass die Differenz in der Bolzenlänge bzw. Schraubenlänge reduziert wird.

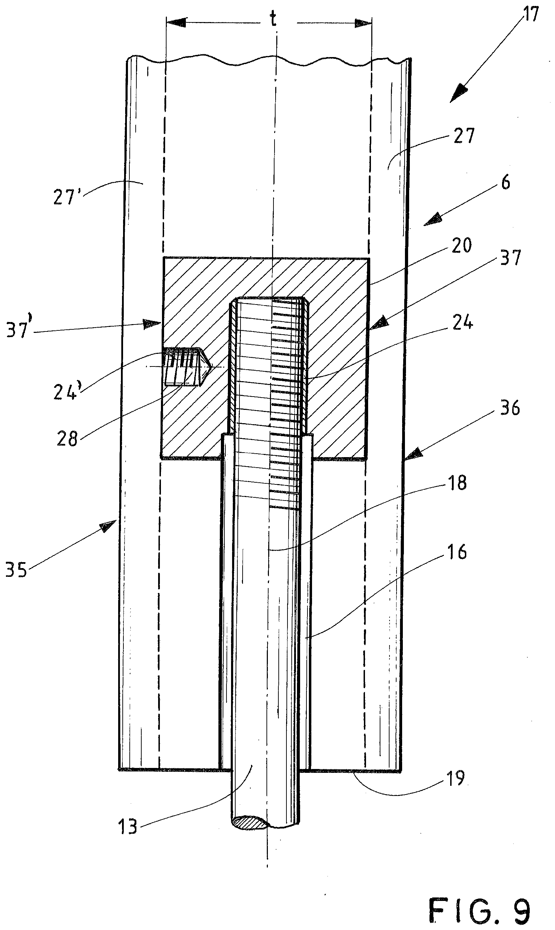

Fig. 9 zeigt eine schematische Schnittdarstellung eines weiteren bevorzugten Rotorblattanschlusses 17.

In diesem Ausführungsbeispiel wird ein von der Tiefe t her etwas kürzerer Querstift 20 verwendet, der auf den Stiftseiten 37 und 37' zu der Innenfläche 35 bzw. der Außenfläche 36 des Rotorblatts bzw. der Blattwurzel 6 mit Decklaminat 27, 27' versehen ist. Hierdurch ergibt sich eine vollständige Einkapselung des Querstiftes 20. Dadurch erhöht sich die Festigkeit der Kombination des Querstifts 20 mit der Blattwurzel 6. Gefertigt wird dieses so, dass zunächst das Wurzellaminat in der Dicke gefertigt wird, die notwendig ist, um den Querstift 20 zu tragen. Dieses Laminat wird dann mit den Bohrungen für die Querstifte 20 versehen und außerdem mit den Bohrungen für die Schrauben 13. Die Querstifte 20 werden dann montiert. Es wird dann von innen und außen um das zentrale Laminat soviel weiteres Laminat eingefügt, um die Lasten aus dem Rotorblatt sicher auf den zentralen Laminatring zu übertragen. Eine besonders vorteilhafte Ausführung dieses Anschlussprinzips bzw. dieses Rotorblattanschlusses besteht darin, das zentrale Laminatteil in einem Glasfaser-Metall-Hybridlaminat zu fertigen.

Durch die Ausführungsform des bevorzugten Rotorblattanschlusses gemäß Fig. 9 können mehr Bolzenpaare bzw. Stift-/Schraubenpaare als bei einer herkömmlichen Bolzenanordnung Verwendung finden.

Bei der Fertigung des Rotorblatts können zunächst die Blatthalbschalen trocken und noch nicht gerimt (RIM von Resin Infusion Moulding) vorliegen. Es wird dann der Gurt in Form von unidirektionalen Glasfasern oder Kohlefasern eingelegt. Es wird ein Halbring mit vorgefertigten Querstiftverbindungen oder -vorverbindungen gefertigt und angefügt. Es schließt sich ein Vakuum-RIM an und ein anschließendes Verkleben der Blatthalbschalen. Bei diesem Fertigungsverfahren ist eine relativ gute Fügegenauigkeit notwendig. Als Abschluss des blattwurzelseitigen Endes 19 könnte auch eine Stahlplatte vorgesehen sein, die mit angepasster Klebe-Dicke auf das blattwurzelseitige Ende 19 der Blattwurzel bzw. des Rotorblattes aufgebracht bzw. aufgeklebt wird.

Eine alternative Vorgehensweise bzw. ein alternatives Verfahren sieht so aus, dass nach dem Vorsehen der Blatthalbschalen der Gurt eingelegt wird, das Rimen, insbesondere Vakuum-Rimen, stattfindet, anschließend ein Verkleben der Blatthalbschalen, anschließend das Vorsehen der entsprechenden Löcher für die Querstifte und die Schraubverbindung und anschließend ein Aufkleben eines Innen- und Außenrings, die insgesamt aus drei oder vier Teilen bestehen. Wenn der Anschluss konisch ist, sind drei Teile vorgesehen und wenn der Anschluss zylindrisch ist, sind vier Teile vorgesehen.

Fig. 9 zeigt auch noch ein Gewindesackloch 28, das mit einem Gewinde 24' versehen ist, um bei einem Defekt des Querstifts 20 diesen einfach austauschen zu können. Hierzu wird das Laminat im Bereich des Querstiftes 20 von der Innenseite 35 entfernt, eine Schraube in das Sackloch 28 eingeschraubt, der Querstift 20 herausgezogen, ein neuer Querstift 20 eingefügt und das Laminat 27' wieder neu aufgebracht. Auch dieses Ausführungsbeispiel kann mit den vorgenannten Ausführungsbeispielen kombiniert werden,

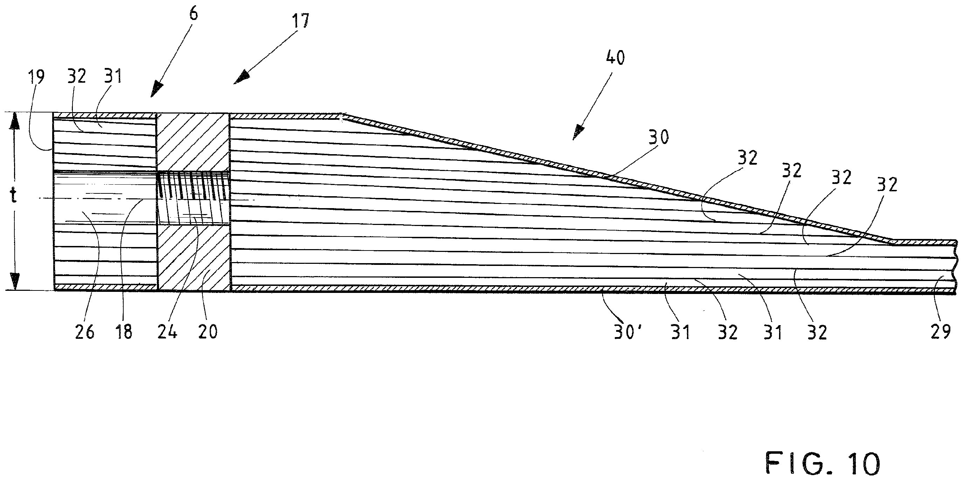

Fig. 10 zeigt eine schematische Schnittdarstellung eines erfindungsgemäßen Rotorblattanschlusses 17. Es ist im Wesentlichen eine Blattwurzel 6 im Übergang zum normalen Blattschalenlaminat des Rotorblatts 5 dargestellt. In diesem Ausführungsbeispiel ist die Idee realisiert, die zulässige Flächenpressung bzw. Lochleibungsfestigkeit durch Vorsehen von Metallschichten 32 zu erhöhen. Es ist zu berücksichtigen, dass die vorgesehenen Querstifte 20 in der Verbauung mit einer in Fig. 10 nicht dargestellten Schraube einer sehr hohen Vorspannung unterliegt. Die Metallbleche bzw. Metallfolien, die in einer Metalllage 32 vorliegen, sind vorzugsweise so dünn, dass sie sich eigenständig in Form beispielsweise eines Halbkreises schmiegen können. Bevorzugterweise haben diese eine Dicke zwischen 0,2 mm und 0,4 mm. Die Struktur, die sich ergibt, ist eine Hybridstruktur aus abwechselnden Metalllagen 32 und glasfaserverstärkten Kunststofflagen 31. Die Dicke der Glasfaserlagen liegt in diesem Ausführungsbeispiel bei 1,2 mm. Bei einer Dicke des glasfaserverstärkten Kunststoffes von 1,2 mm und einer Dicke von beispielsweise Stahl von 0,3 mm liegt der Stahlanteil bei 20 %. Die Schraubenzusatzkraft sinkt insbesondere bei Zugbelastung, da das Verhältnis der Steifigkeit der verspannten Teile zur Steifigkeit des zugbelasteten Teils günstiger wird. Hierdurch ergibt sich eine günstigere Beeinflussung der Verspannungsverhältnisse der Schraubenverbindung, wodurch auch die Zusatzlast im Querstift 20 deutlich verringert wird. Außerdem wird durch die hohe Druckfestigkeit von Metall die Lochleibungsfestigkeit deutlich erhöht.

Durch die asymmetrische Schichtung der Lagen, d.h. in diesem Ausführungsbeispiel die Lage um Lage Verringerung der Länge der Schichten in axialer Richtung der Längsachse des Rotorblatts bzw. der Längsachse 18 der nicht dargestellten Schraube bzw. der Längsachse 18 der Durchgangsbohrung 26 ist eine sehr schnelle und einfache Fertigung und Kontrolle der Fertigung ermöglicht. Bei der Fertigung werden vorzugsweise auch unidirektionale Glasfasermatten in längsaxialer Richtung des Rotorblatts verwendet, um im RIM-Verfahren entsprechend Kunststoff gleichmäßig verteilen zu können. Um allerdings temperaturinduzierte Spannung zwischen dem glasfaserverstärkten Kunststoff und dem Stahl zu verringern, ist es sinnvoll, auch ausreichend Fasern unidirektional in Umfangsrichtung einzubringen.

Der lagenweise Übergang mit jeweils kürzeren Lagen aus glasfaserverstärktem Kunststoff und Metall ist insbesondere gut im Übergangsbereich 40 zu erkennen.

Die in Fig. 10 dargestellten unteren Lagen 31 sind vorzugsweise bis in den Außenbereich des Blattes durchgehend ausgeführt.

Um Korrosion zu vermeiden ist eine Deckschicht 30 bzw. 30' vorgesehen.

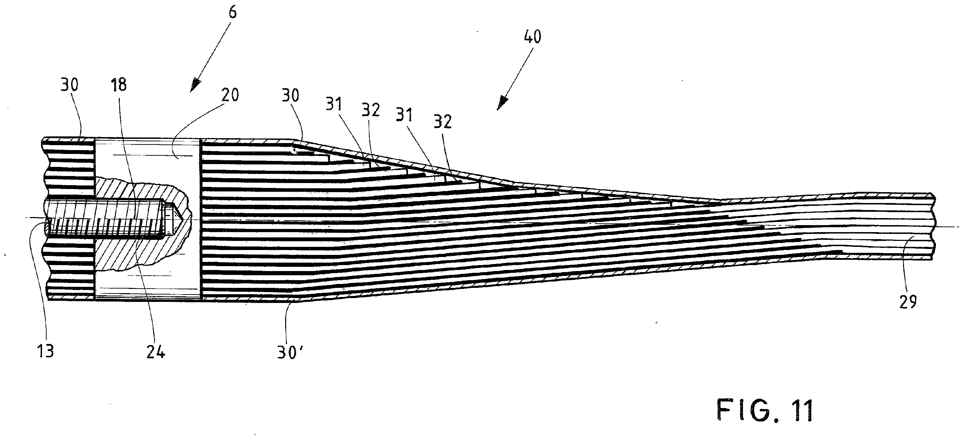

Fig. 11 zeigt einen weiteren erfindungsgemäßen Rotorblattanschluss 17 in schematischer Schnittdarstellung, bei der auch eine Art Hybrid-Schicht aus Metalllagen und glasfaserverstärkten Kunststofflagen vorgesehen sind. Im Unterschied zum Ausführungsbeispiel gemäß Fig. 10 ist der in Fig. 11 dargestellte untere Bereich auch im Querschnitt angewinkelt dargestellt, was besonders gut an der Deckschicht 30' erkennbar ist. Die Mittelachse der Blattwandung liegt hier im Wesentlichen mit der Schraubenlängsachse 18 übereinander.

Anstelle von Stahl kann auch Aluminium oder Titan oder ein anderes Metall Verwendung finden. Anstelle eines durchgängigen Blechs oder einer durchgängigen Folie aus Metall kann auch eine durchlöcherte Metalllage 32 bzw. mehrere durchlöcherte Metalllagen 32 Verwendung finden. Dieses führt zu einer besseren Verteilung des Kunststoffes in der Blattwurzel 6 und im Übergangsbereich 40.

Die Tiefe t kann in den Ausführungsbeispielen gemäß Fig. 10 und Fig. 11 am blattwurzelseitigen Ende des Rotorblatts bei 50 mm bis 100 mm liegen. Der Durchmesser des Querstiftes 20 kann bei 45 mm liegen. Der Abstand vom blattwurzelseitigen Ende bis zum Mitte des Querstiftes 20 liegt bei ungefähr 2,5 x dem Durchmesser des Querstiftes 20, also bei ca. 112 mm. Der Übergangsbereich 40 fängt auch ungefähr bei 112 mm ab der Mitte des Querstiftes 20 an sich zu verjüngen. Diese Maße gelten bevorzugt bei einem Rotorblatt von 40 m bis 45 m. Die Verjüngung des Rotorblatts im Übergangsbereich 40 kann sich über eine Strecke von 300 mm bis ca. 1.400 mm erstrecken. Die Dicke des tragenden Laminats der Blattschale bei 29 beträgt dann ca. 15 mm bis 20 mm. Auch die Ausführungsbeispiele gemäß den Figuren 10 und 11 können mit den vorgenannten erfindungsgemäßen Ausführungsformen kombiniert werden.

### Bezugszeichenliste

- 1: Windenergieanlage
- 2: Turm
- 3: Turmkopf
- 4: Rotornabe
- 5: Rotorblatt
- 6: Blattwurzel
- 7: Öffnung
- 8: Öffnung
- 9: Flanschloch
- 10: Generatorschaft
- 11: Flansch
- 12, 12': Loch
- 13: Schraube
- 14: Querstift
- 15: Mutter
- 16: Loch
- 17: Rotorblattanschluss
- 18: Längsachse
- 19: blattwurzelseitiges Ende
- 20, 20': Querstift
- 21: Dehnbolzen
- 22: Wandung
- 23: Flansch
- 24, 24': Gewinde
- 25: Sackloch
- 26: Durchgangsloch
- 27,27': Decklaminat
- 28: Gewindesackloch
- 29: Blattschalenlaminat
- 30, 30': Deckschicht
- 31: Laminatlage
- 32: Metalllage
- 33: erste Reihe
- 34: zweite Reihe
- 35: Innenfläche
- 36: Außenfläche
- 37, 37': Stiftseite
- 40: Übergangsbereich
- 41: Rotorblattspitze
- 42: Mutter
- L_{ges}: gesamte Höhe
- t: Tiefe
- h: Höhe
- B: Breite
- D: Durchmesser
- R: Radius
- A: Abstand

## Patentansprüche

1. Rotorblatt (5) mit einem Rotorblattanschluss (17) für eine Windenergieanlage (1) zur Verbindung des Rotorblatts (5) mit einer Anschlussvorrichtung (4), umfassend eine Verbindungsvorrichtung (13, 21) und einen mit der Verbindungsvorrichtung (13, 21) in Wirkverbindung stehenden Querstift (20, 20'), **dadurch gekennzeichnet, dass** das Material (30-32) des Rotorblatts (5) wenigstens im Bereich des Querstifts (20, 20') eine Struktur aus faserverstärkten Kunststofflagen (31) und Lagen aus einem Metall umfassenden Verstärkungsmaterial (32) umfasst.

2. Rotorblatt (5) nach Anspruch 1, wobei, wenn das Rotorblatt (5) an einer Rotornabe (4) einer Windenergieanlage (1) montiert ist, wenigstens die Verbindungsvorrichtung (13, 21) vorgespannt ist, **dadurch gekennzeichnet, dass** der Bereich sich auf den Bereich erstreckt, in der eine Kraft aufgrund der Vorspannung auf das Material (30-32) des Rotorblatts (5) wirkt.

3. Rotorblatt (5) nach Anspruch 1 oder 2, **dadurch gekennzeichnet, dass** der Bereich sich auf den Bereich der Rotorblattwurzel (6) erstreckt.

4. Rotorblatt (5) nach einem der Ansprüche 1 bis 3, **dadurch gekennzeichnet, dass** in einem Übergangsbereich (40) zur Anpassung der Struktur der Rotorblattwurzel (6) an die Struktur des Rotorblatts (5, 29) eine, wenigstens teilweise von Lage zu Lage, insbesondere stetige, Verlängerung der Lagen (32) aus dem Verstärkungsmaterial (32) zu der Rotorblattspitze (41) vorgesehen ist.

5. Rotorblatt (5) nach einem der Ansprüche 1 bis 4, **dadurch gekennzeichnet, dass** das Verstärkungsmaterial (32) Metall ist.

6. Rotorblatt (5) nach Anspruch 5, **dadurch gekennzeichnet, dass** das Metall als Folie (32) oder Gitter vorliegt.

7. Rotorblatt (5) nach Anspruch 6, **dadurch gekennzeichnet, dass** die Dicke der Folie (32) zwischen 0,1 mm bis 0,8 mm, insbesondere zwischen 0,15 mm bis 0,5 mm, insbesondere zwischen 0,2 mm und 0,3 mm liegt.

8. Rotorblatt (5) nach einem der Ansprüche 1 bis 7, **dadurch gekennzeichnet, dass** die Dicke der faserverstärkten Kunststofflagen (31) zwischen 0,2 mm und 1 mm, insbesondere zwischen 0,4 mm und 0,9 mm, insbesondere zwischen 0,6 mm und 0,7 mm liegt.

9. Rotorblatt (5) nach einem der Ansprüche 1 bis 8, **dadurch gekennzeichnet, dass** wenigstens ein Teil der faserverstärkten Kunststofflagen (31) unidirektional ausgerichtete Fasern aufweist, die in längsaxialer Richtung des Rotorblatts (5) ausgerichtet sind.

10. Rotorblatt (5) nach einem der Ansprüche 1 bis 9, **dadurch gekennzeichnet, dass** die Längsachse (18) der Verbindungsvorrichtung (13, 21) im Wesentlichen mit der Mittelachse (18) des Rotorblattwandungen (5) fluchtet, insbesondere in einer Ebene mit dieser liegt.

11. Rotorblatt (5) nach einem der Ansprüche 1 bis 10, **dadurch gekennzeichnet, dass** die Verbindungsvorrichtung (13, 21) eine Schraube (13, 21), insbesondere Dehnschaftschraube (21), umfasst.

12. Rotorblatt (5) nach einem der Ansprüche 1 bis 11, **dadurch gekennzeichnet, dass** mehrere Verbindungsvorrichtungen (13, 21) vorgesehen sind, die in Wirkverbindung mit jeweils wenigstens einem Querstift (20, 20') stehen.

13. Rotorblatt (5) nach einem der Ansprüche 1 bis 12, **dadurch gekennzeichnet, dass** die Wirkverbindung eine Vorspannung erzeugt.

14. Rotor (4, 5) einer Windenergieanlage (1) mit wenigstens einem Rotorblatt (5) nach einem der Ansprüche 1 bis 13 und einer Rotornabe (4)..

15. Verwendung einer Windenergieanlage (1) mit einem Rotorblatt (5) nach einem der Ansprüche 1 bis 14.

## Claims

1. A rotor blade (5) with a rotor blade connection (17) for a wind power plant (1) for connecting the rotor blade (5) to a connecting apparatus (4), comprising an attachment apparatus (13, 21) and a transverse pin (20,20') in operative connection with the attachment apparatus (13, 21), **characterized in that** the material (30-32) of the rotor blade (5), at least in the region of the transverse pin (20, 20'), comprises a structure consisting of fiber-reinforced plastic layers (31) and layers consisting of a metal comprising reinforcing material (32).

2. The rotor blade (5) according to claim 1, wherein when the rotor blade (5) is mounted on a rotor hub (4) of a wind power plant (1), at least the attachment apparatus (13, 21) is pretensioned, **characterized in that** the region extends to the region in which a force acts due to the pretension on the material (30-32) of the rotor blade (5).

3. The rotor blade (5) according to claim 1 or 2, **characterized in that** the region extends to the region of the rotor blade root (6).

4. The rotor blade (5) according to one of claims 1 to 3, **characterized in that**, in a transitional region (40) for adapting the structure of the rotor blade root (6) to the structure of the rotor blade (5, 29), an extension of the layers (32) from the reinforcing material (32) to the rotor blade tip (41) is provided at least partially from layer to layer, in particular continuously.

5. The rotor blade (5) according to one of claims 1 to 4, **characterized in that** the reinforcing material (32) is metal.

6. The rotor blade (5) according to claim 5, **characterized in that** the metal is present as a film (32) or grid.

7. The rotor blade (5) according to claim 6, **characterized in that** the thickness of the film (32) lies between 0.1 mm to 0.8 mm, in particular between 0.15 mm to 0.5 mm, in particular between 0.2 mm and 0.3 mm.

8. The rotor blade (5) according to one of claims 1 to 7, **characterized in that** the thickness of the fiber-reinforced plastic layers (31) lies between 0.2 mm and 1 mm, in particular between 0.4 mm and 0.9 mm, in particular between 0.6 mm and 0.7 mm.

9. The rotor blade (5) according to one of claims 1 to 8, **characterized in that** at least a part of the fiber-reinforced plastic layers (31) has unidirectionally oriented fibers that are oriented in the longitudinal direction of the rotor blade (5).

10. The rotor blade (5) according to one of claims 1 to 9, **characterized in that** the longitudinal axis (18) of the attachment apparatus (13, 21) is essentially flush with the middle axis (18) of the rotor blade walls (5), in particular lies in a plane therewith.

11. The rotor blade (5) according to one of claims 1 to 10, **characterized in that** the attachment apparatus (13, 21) comprises a bolt (13, 21), in particular a reduced shank bolt (21).

12. The rotor blade (5) according to one of claims 1 to 11, **characterized in that** a plurality of attachment apparatuses (13, 21) are provided that are in operative connection with the at least one transverse pin (20, 20').

13. The rotor blade (5) according to one of claims 1 to 12, **characterized in that** the operative connection generates a pretension.

14. The rotor blade (4, 5) of a wind power plant (1) with at least one rotor blade (5) according to one of claims 1 to 13 and a rotor hub (4).

15. A use of a wind power plant (1) with a rotor blade (5) according to one of claims 1 to 14.

## Revendications

1. Pale de rotor (5) ayant une attache de pale de rotor (17) pour une éolienne (1) afin de raccorder la pale de rotor (5) à un dispositif d'assemblage (4), comportant un dispositif d'assemblage (13, 21) et une goupille transversale (20, 20') en liaison active avec le dispositif d'assemblage (13, 21), **caractérisée en ce que** le matériau (30 à 32) de la pale de rotor (5) comporte, au moins dans la zone de la goupille transversale (20, 20'), une structure constituée de couches de matière plastique renforcées par des fibres (31) et de couches constituées d'un matériau de renfort (32) incluant un métal.

2. Pale de rotor (5) selon la revendication 1, dans laquelle, lorsque la pale de rotor (5) est montée sur un moyeu de rotor (4) d'une éolienne (1), une précontrainte est exercée au moins sur le dispositif d'assemblage (13, 21), **caractérisée en ce que** la zone s'étend jusqu'à la zone dans laquelle une force s'exerce sur le matériau (30 à 32) de la pale de rotor (5) en raison de la précontrainte.

3. Pale de rotor (5) selon la revendication 1 ou la revendication 2, **caractérisée en ce que** la zone s'étend jusqu'à la zone de l'emplanture de pale de rotor (6).

4. Pale de rotor (5) selon l'une des revendications 1 à 3, **caractérisée en ce que** dans une zone de transition (40) destinée à adapter la structure de l'emplanture de pale de rotor (6) à la structure de la pale de rotor (5, 29), une extension au moins partielle d'une couche à l'autre, en particulier constante, des couches (32) constituées du matériau de renfort (32) est prévu jusqu'à la pointe de la pale de rotor (41).

5. Pale de rotor (5) selon l'une des revendications 1 à 4, **caractérisée en ce que** le matériau de renfort (32) est un métal.

6. Pale de rotor (5) selon la revendication 5, **caractérisée en ce que** le métal est présent sous la forme d'un film (32) ou d'un treillis.

7. Pale de rotor (5) selon la revendication 6, **caractérisée en ce que** l'épaisseur du film (32) est comprise entre 0,1 mm et 0,8 mm, en particulier entre 0,15 mm et 0,5 mm, en particulier entre 0,2 mm et 0,3 mm.

8. Pale de rotor (5) selon l'une des revendications 1 à 7, **caractérisée en ce que** l'épaisseur des couches de matière plastique renforcées par des fibres (31) est comprise entre 0,2 mm et 1 mm, en particulier entre 0,4 mm et 0,9 mm, en particulier entre 0,6 mm et 0,7 mm.

9. Pale de rotor (5) selon l'une des revendications 1 à 8, **caractérisée en ce qu'**au moins une partie des couches de matière plastique renforcées par des fibres (31) comporte des fibres orientées de manière unidirectionnelle qui sont alignées dans une direction longitudinale axiale de la pale de rotor (5).

10. Pale de rotor (5) selon l'une des revendications 1 à 9, **caractérisée en ce que** l'axe longitudinal (18) du dispositif d'assemblage (13, 21) est sensiblement aligné avec l'axe central (18) des parois de pale de rotor (5) et se situe en particulier dans un plan commun avec celui-ci.

11. Pale de rotor (5) selon l'une des revendications 1 à 10, **caractérisée en ce que** le dispositif d'assemblage (13, 21) comporte une vis (13, 21), en particulier une vis à tige extensible (21).

12. Pale de rotor (5) selon l'une des revendications 1 à 11, **caractérisée en ce que** plusieurs dispositifs d'assemblage (13, 21) sont prévus, lesquels dispositifs d'assemblage sont chacun en liaison active avec au moins une goupille transversale (20, 20').

13. Pale de rotor (5) selon l'une des revendications 1 à 12, **caractérisée en ce que** la liaison active engendre une précontrainte.

14. Rotor (4, 5) d'une éolienne (1) comportant au moins une pale de rotor (5) selon l'une des revendications 1 à 13 et un moyeu de rotor (4).

15. Utilisation d'une éolienne (1) ayant une pale de rotor (5) selon l'une des revendications 1 à 14.
